## Europäisches Patentamt

## European Patent Office

## Office européen des brevets

(19)

(11) Veröffentlichungsnummer: **0 056 120**
A2

(12) **EUROPÄISCHE PATENTANMELDUNG**

(21) Anmeldenummer: 81110343.1

(22) Anmeldetag: 11.12.81

(51) Int. Cl.³: **B 29 D 7/24**, B 29 F 3/08

(30) Priorität: 14.01.81 DE 3100871

(43) Veröffentlichungstag der Anmeldung: **21.07.82**
**Patentblatt 82/29**

(84) Benannte Vertragsstaaten: **AT BE CH DE FR GB IT LI LU NL SE**

(71) Anmelder: **BASF Aktiengesellschaft,
Carl-Bosch-Strasse 38, D-6700 Ludwigshafen (DE)**

(72) Erfinder: **Plesske, Peter, Ing.grad., Schwanthaler Alle 18,
D-6700 Ludwigshafen (DE)**
Erfinder: **Kraemer, Albert, Ing. grad., Weisenheimer
Strasse 27, D-6700 Ludwigshafen (DE)**

(54) **Verfahren und Vorrichtung zur Herstellung von Schlauchfolien aus thermoplastischen Kunststoffen.**

(57) Bei der Herstellung von Schlauchfolien aus thermoplastischen Kunststoffen wird der Kunststoff zunächst zu einem Schlauch extrudiert, der Schlauch zum Folienschlauch aufgeblasen und der Folienschlauch gekühlt und mit zwei längslaufenden Falzkanten zur Schlauchfolie flachgelegt. Zwecks Vermeidung einer festigkeitsmäßigen Schwächung längs der Falzkanten wird der Folienschlauch vor der Frostlinie im Bereich der einzubringenden Falzkanten durch Kontaktkühlung auf eine Temperatur von wenigstens 60 °C unterhalb des Kristallitbildungsbereichs des thermoplastischen Kunststoffs gekühlt. Hierzu werden drehbare, von einem Kühlmedium durchströmte und am Folienschlauch anliegende Walzen verwendet.

EP 0 056 120 A2

0056120

O.Z. 0050/034865

## Verfahren und Vorrichtung zur Herstellung von Schlauchfolien aus thermoplastischen Kunststoffen

Die Erfindung bezieht sich auf ein Verfahren zur Herstellung von Schlauchfolien aus thermoplastischen Kunststoffen, bei dem der thermoplastische Kunststoff zunächst zu einem Schlauch extrudiert, der Schlauch zum Folienschlauch aufgeblasen und der Folienschlauch gekühlt und mit zwei längslaufenden Falzkanten zur Schlauchfolie flachgelegt wird. Des weiteren betrifft die Erfindung eine Vorrichtung zur Durchführung des beschriebenen Verfahrens.

Schlauchfolien, beispielsweise für Tragetaschen, Müllsäcke und dgl. werden überwiegend aus Polyethylen niederer Dichte hergestellt. Dabei wird das in einem Extruder plastifizierte Material aus einer Ringdüse in Form eines Schlauches ausgetragen und der Schlauch im Durchmesser aufgeweitet, in der Regel im Verhältnis Schlauch- : Düsendurchmesser von 1 : 1,4 bis 1 : 2. Während seiner Formgebung erfolgt die Abkühlung des Folienschlauches durch entlang der Oberfläche des Folienschlauches strömende Kühlluft sowie durch die Blasluft im Schlauchinnern. Vor dem Abzug wird der Folienschlauch flachgelegt, d.h. an seinen seitlichen Begrenzungen werden Falzkanten ausgebildet. Bei diesem Vorgang ergeben sich jedoch Mängel an den Schlauchfolien. Es hat sich gezeigt, daß insbesondere deren Festigkeit im Bereich der Falzkanten, je nach dem eingesetzten thermoplastischen Kunststoff und den Verfahrensbedingungen im einzelnen, mehr oder weniger stark geschwächt ist. Entsprechende Messungen nach Dart-Drop (ASTMD 1709) lassen erkennen, daß die Folienzähigkeit in den Falzkanten nur bei 50 bis 60 % der sonstigen Folienwerte liegen, d.h. die Zähigkeit nimmt durch den Faltvorgang in den Falzkanten um 40 bis 50 % ab. Damit ist aber die Schlauchfolie im ganzen in ihrer Qualität erheblich

Wr/BL

beeinträchtigt. So erfordern beispielsweise Schwergutsäcke, die nach der Festigkeit der schwächsten Folienstelle dimensioniert werden, einen wesentlich erhöhten Materialeinsatz, um auch in den Schwachstellen die geforderte Tragfähigkeit zu gewährleisten.

Es war daher Aufgabe der Erfindung, ein Verfahren anzugeben, welches es erlaubt, Schlauchfolien aus thermoplastischen Kunststoffen herzustellen, bei denen längs der Falzkanten eine festigkeitsmäßige Schwächung nicht mehr vorhanden ist. Der Erfindung lag fernerhin die Aufgabe zugrunde, eine zur Durchführung des Verfahrens geeignete einfache Vorrichtung anzugeben.

Die das Verfahren betreffende Aufgabe wird grundsätzlich dadurch gelöst, daß der Schlauch vor der Frostlinie im Bereich der einzubringenden Falzkanten durch Kontaktkühlung auf eine Temperatur von wenigstens 60°C unterhalb des Kristallitbildungsbereiches des thermoplastischen Kunststoffes gekühlt wird.

Hierdurch wird die durch den Abkühlprozeß bei teilkristallin erstarrenden Thermoplasten entstehende Kristallitbildung beeinflußt. Eine langsame Abkühlung führt bei Folien aus Polyethylen niederer Dichte zu teilkristallinen Gefügen mit Dart-Drop-Werten für eine 150 $\mu$m dicke Folie von 400 $\pm$ 40 g. Durch die erfindungsgemäße schroffe Abkühlung wird die Kristallitbildung stark eingeschränkt. Überraschenderweise bleibt dabei die Zähigkeit praktisch konstant oder fällt nur minimal ab, d.h. die Dart-Drop-Werte einer vergleichbaren Folie bleiben unverändert.

Die erfindungsgemäße schroffe Abkühlung erfolgt nur in dem Teil des Schlauchumfanges, in dem später zur Flachlegung Falzkanten eingebracht werden. Um den Dehnprozeß

0056120

des extrudierten Schlauches während der Herstellung nicht wesentlich zu behindern, wird in der sogenannten Schlauchbildungszone, d.h. kurz vor der Frostlinie bzw. im Kristallitbildungsbereich gekühlt. Die Kühlung wird durch direkten Kontakt des Folienschlauches mit einem festen Kühlmedium, beispielsweise Trockeneis ($CO_2$), oder durch Kontakt des Folienschlauches mit einer von einem flüssigen Kühlmedium, z.B. Wasser, beaufschlagten Kontaktfläche erreicht. Für die üblicherweise für die Schlauchfolienherstellung in Betracht kommenden thermoplastischen Kunststoffe, wie Polyethylen, Polypropylen oder Polyvinylchlorid, hat sich eine Abkühlung auf eine Temperatur von wenigstens 60°C unterhalb des Erweichungspunktes des jeweiligen Kunststoffes insgesamt als vorteilhaft erwiesen.

Gegenstand der Erfindung ist weiterhin eine Vorrichtung zur Durchführung des Verfahrens, bestehend aus einem Blaskopf mit Ringspalt-Schlauchmundstück und einer Einrichtung zur Blaslufteinführung in den extrudierten Schlauch sowie zur Kühlluftzufuhr entlang dem Folienschlauch, wobei im Bereich der am Folienschlauch einzubringenden Falzkanten drehbare, von einem Kühlmedium durchströmte und am Folienschlauch anliegende Walzen angeordnet sind.

Damit sind auf dem Schlauchfolienumfang zwei diametral gegenüberliegende gekühlte Bereiche ausgebildet. In diesen Bereichen wird durch die Kontaktkühlung und somit schroffe Wärmeabfuhr, die in der Folie zuvor beschriebene Wirkung erzielt. Diese Einflußnahme ist verbunden mit einer Zähigkeitszunahme und Steifigkeitsabnahme. Sie bleibt auf die Falzkanten beschränkt. Der restliche Folienumfang behält die für die Folienkonfektionierung erforderliche Steifigkeit.

Nach einem weiteren Merkmal der Erfindung sind die Walzen durch das Kühlmedium antreibbar, wodurch Reibungsverluste zwischen Walze und Folienschlauch und damit Markierungen auf der Folienoberfläche weitgehend vermieden werden.

In weiterer Ausgestaltung der erfindungsgemäßen Vorrichtung sind unterhalb der Walzen Leitbleche für die Ableitung der entlang dem Folienschlauch strömenden Kühlluft vorgesehen. Auf diese Weise lassen sich auch hohe Abzugsgeschwindigkeiten erreichen, ohne daß der Kontakt zwischen Schlauchfolie und den gekühlten Walzen unterbrochen wird.

Bei rotierenden Schlauchfolienwerzeugen werden die Kühlwalzen in der horizontalen Ebene ihrer Anordnung um einen Winkel  zu den Abzugswalzen versetzt. Der Winkel  ergibt sich dabei aus der Drehgeschwindigkeit des Schlauchfolienwerkzeugs und aus der Abzugsgeschwindigkeit der Folie.

Im folgenden wird die Erfindung anhand eines Ausführungsbeispiels näher erläutert.

Es zeigen in schematischer Darstellung

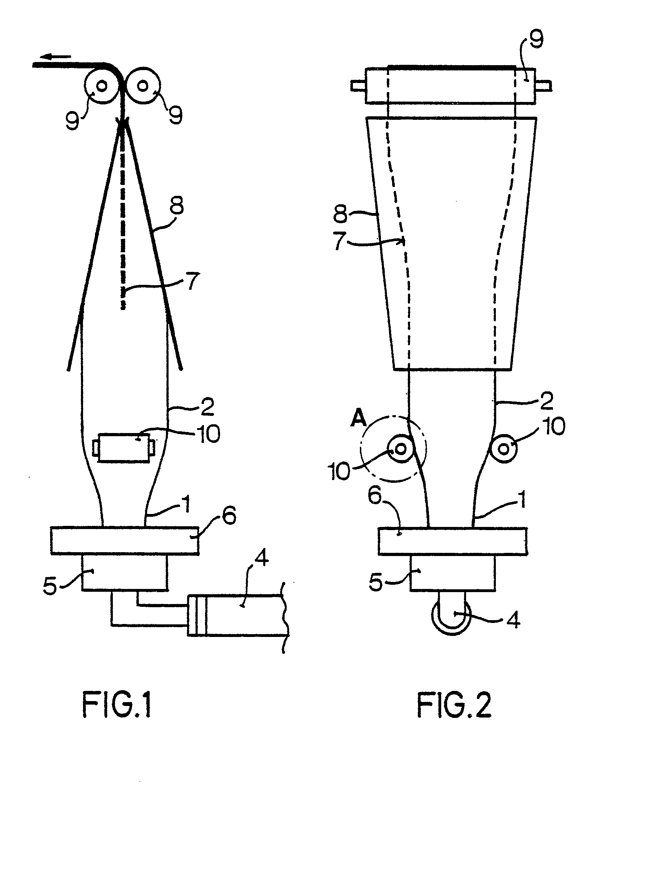

Fig. 1      die Ansicht einer Vorrichtung zur Durchführung des erfindungsgemäßen Verfahrens,

Fig. 2      eine Seitenansicht der Vorrichtung nach Fig. 1,

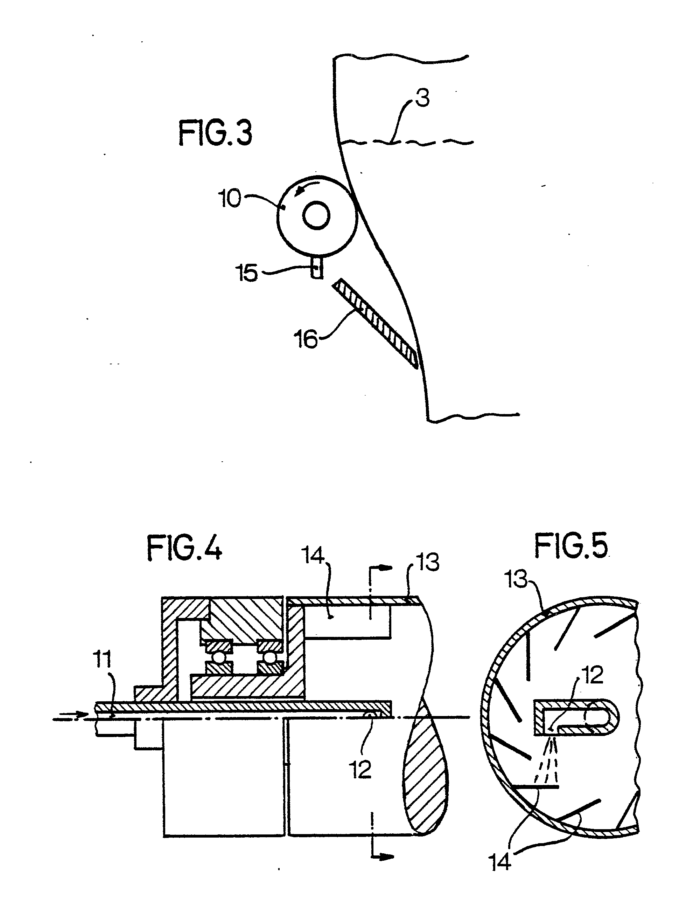

Fig. 3      eine vergrößerte Darstellung des Ausschnittes A in Fig. 2,

Fig. 4      einen Längsschnitt einer der in der Schlauchbildungszone angeordneten Walzen und

Fig. 5      die Walze gemäß Fig. 4 in Querschnitt.

Für die kontinuierliche Schlauchfolienherstellung wird der in einem Extruder 4 plastifizierte thermoplastische Kunst-

stoff in Form eines Schlauches 1 aus einem Blaskopf 5 mit Ringspalt-Schlauchmundstück ausgetragen, zum Folienschlauch 2 aufgeblasen und gekühlt. Hierzu wird aus einer entsprechenden Einrichtung 6, beispielsweise aus einem Kühlring, Kühlluft entlang der Schlauch- bzw. Folienschlauchoberfläche sowie Blasluft in den extrudierten Schlauch geleitet. Der aufgeblasene Folienschlauch wird mit längslaufenden Falzkanten 7 flachgelegt und aufgewickelt. Im allgemeinen erfolgt die Flachlegung und damit die Ausbildung der Falzkanten mit Hilfe von Lattenrosten 8 oder Rollenflachlege-Einrichtungen, die zentrisch über der Achse des Blaskopfes 5 angebracht sind. Über der Flachlege-Einrichtung folgen im kurzen Abstand die Abzugswalzen 9.

In der Schlauchbildungszone, d.h. in dem Bereich, in dem der Schlauch 1 auf den vollen Durchmesser des Folienschlauches 2 gedehnt wird, sind zwei diametral gegenüberliegende Walzen 10 angeordnet. Dieser Bereich ist durch die sogenannte Frostlinie 3 nach oben hin begrenzt. Bis zur Frostlinie hat die Kühlung des Schlauches bzw. Folienschlauches deutlichen Einfluß auf seine Eigenschaften und Dickengleichmäßigkeit.

Die drehbar gelagerten Walzen 10 bestehen aus jeweils einem zylindrischen Mantel 13, der koaxial zu einer Zuleitung 11 mit Düse 12 für die Zufuhr eines vorzugsweise flüssigen Kühlmediums angeordnet ist. Auf der Innenseite des Mantels 13 sind Leitschaufeln 14 vorgesehen, auf die das Kühlmedium auftrifft und die Walzen in Drehbewegung versetzt. Mit 15 ist der Ablauf des Kühlmediums aus der Walze bezeichnet.

Unterhalb der Walzen 10 sind Leitbleche 16 vorgesehen, die bewirken, daß der entlang der Schlauch- bzw. Schlauchfolien-

0056120

oberfläche strömende Kühlluftstrom abreißt. Auf diese Weise wird verhindert, daß die Schlauchfolie 2 von den Walzen 10 abhebt und damit deren Kühlwirkung gemindert oder gänzlich aufgehoben wird.

0056120

Patentansprüche

1. Verfahren zur Herstellung von Schlauchfolien aus thermoplastischen Kunststoffen, bei dem der thermoplastische Kunststoff zunächst zu einem Schlauch extrudiert, der Schlauch zum Folienschlauch aufgeblasen und der Folienschlauch gekühlt und mit zwei längslaufenden Falzkanten zur Schlauchfolie flachgelegt wird, dadurch gekennzeichnet, daß der Schlauch vor der Frostlinie im Bereich der einzubringenden Falzkanten durch Kontaktkühlung auf eine Temperatur von wenigstens 60°C unterhalb des Kristallitbildungsbereiches des thermoplastischen Kunststoffes gekühlt wird.

2. Vorrichtung zur Durchführung des Verfahrens nach Anspruch 1, bestehend aus einem Blaskopf mit Ringspalt-Schlauchmundstück und einer Einrichtung zur Blaslufteinführung in den extrudierten Schlauch sowie zur Kühlluftzufuhr entlang dem Folienschlauch, dadurch gekennzeichnet, daß im Bereich der am Folienschlauch 2 einzubringenden Falzkanten 7 drehbare, von einem Kühlmedium durchströmte und am Folienschlauch anliegende Walzen 10 angeordnet sind.

3. Vorrichtung nach Anspruch 2, dadurch gekennzeichnet, daß die Walzen 10 durch das die Walzen durchströmende Kühlmedium antreibbar sind.

4. Vorrichtung nach Anspruch 2, dadurch gekennzeichnet, daß unterhalb der Walzen 10 Leitbleche 16 für die Ableitung der entlang dem Folienschlauch 2 strömenden Kühlluft vorgesehen sind.

Zeichn.

FIG.1        FIG.2

0056120

## FIG.3

## FIG.4

## FIG.5